# EUROPEAN PATENT APPLICATION

(11) **EP 4 596 426 A1**
(43) Date of publication of application: **06.08.2025**
(21) Application number: 24155816.2
(22) Date of filing: 05.02.2024
(51) Int. Cl.: B65B 3/04, B65G 15/00, B65G 15/04, B65G 15/06, B65B 7/00, B65B 25/00, B65B 43/52, B65G 54/02

(54) **FILLING MACHINE AND METHOD FOR FILLING PACKAGE BODIES OPEN ON ONE SIDE WITH PRODUCTS**

(71) Applicant: SIG Services AG, 8212 Neuhausen am Rheinfall (CH)
(72) Inventor: MÜLLER, Mario, 52070 Aachen (DE); RONNEBERGER, Rene, 52511 Geilenkirchen (DE); SCHMITT, Heiko, 52525 Heinsberg (DE); SIEWERT, Knut, 41179 Mönchengladbach (DE); ZANDER, Fabian, 52441 Linnich (DE)
(74) Representative: Cohausz & Florack

(57) **Abstract**

Described and shown is a filling machine (20) for filling package bodies (12) open on one side with products, the filling machine (20) having a filling station (35) for filling the package bodies (12) open on one side, a head closure station (37) for closing the head (14) of the filled package bodies (12) open on one side and a transport device (26) for transporting at least the package bodies (12) open on one side at least from the filling station (35) to the head closure station (37) through the filling machine (20). In order to simplify the design of the filling machine without having to accept functional restrictions it is provided that the transport device (26) has at least one pair of at least partly magnetic conveyor belts (27), for holding the package bodies (12) on opposite side walls and for moving the package bodies (12) in a transport direction (T), and in that magnets (52) for holding the conveyor belts (27) in an area adjacent to the magnets (52) are assigned to the rear sides of the conveyor belts (27) facing away from the package bodies (12).

## Description

The invention relates to a filling machine for filling package bodies open on one side with products, wherein the filling machine has a filling station for filling the package bodies open on one side, a head closure station for closing the head of the filled package bodies open on one side and a transport device for transporting at least the package bodies open on one side at least from the filling station to the head closure station through the filling machine. Furthermore, the invention relates to a method for filling package bodies open on one side with products using a filling machine.

Filling machines for filling package bodies that are open on one side with products are used in the food and beverage industry, for example. The package bodies, which are open on one side, are formed from a package material in the form of a cardboard composite, for example. In particular, the package material forms a laminate comprising a cardboard layer and outer, in particular thermoplastic, plastic layers, for example polyethylene (PE). The cardboard gives the package material sufficient stability to form packages that can be easily handled and stacked, for example. The plastic layers protect the cardboard from moisture and the products, especially food, from taking up undesirable substances from the package material. In addition, further layers, such as diffusion protection layers, if necessary an aluminum layer, can be provided to prevent diffusion of oxygen and other gases through the package material.

In the known filling machines, package bodies are typically filled with products in the form of foodstuffs, in particular beverages, whereby flowable products are predominantly used. In particular, for reasons of shelf life, foodstuffs are filled into package bodies in a sterile or aseptic environment of the filling machine, which is also referred to as an aseptic zone or aseptic area. The package bodies are therefore sterilized in the filling machine, then filled and sealed under the most sterile conditions possible. If appropriate package materials are used, the package body is closed by sealing the open end to form a head or so called gable top.

The package bodies are preferably formed on the filling machine from package sleeves which are open at opposing longitudinal ends and have been produced from package material blanks, in particular by sealing the longitudinal edges of the package material blanks to one another. The package sleeves are folded flat and transferred as a stack to a magazine of the filling machine, where they are removed and unfolded and then, for example, placed on a mandrel of a so-called mandrel wheel, on which a bottom is folded and sealed at a longitudinal end of the package sleeve. This results in a package body that is open on one side, which is pulled off the mandrel wheel and fed into a sterilization zone of the filling machine. This is usually done by transferring the package bodies one after the other to cells of a transport device comprising a cell chain. In the sterilization zone, the package bodies are preheated with hot sterile air and then sterilized, typically with hydrogen peroxide (HzOz), and dried with sterile air. The sterile package bodies are transported by the transport device to the filling and sealing zone, where they are filled in a filling station and then sealed in a head sealing station to form a package, before the filled and sealed package is transported out of the filling and sealing zone by the transport device and then removed from the corresponding cells of the transport device.

Alternative filling machines are designed in a largely similar way. A filling machine is also known in which a mandrel wheel and a transport device comprising a cell chain are dispensed with. Instead, the package sleeves are transferred to a transport device comprising a traveling assembly, thereafter sterilized and only then sealed on the bottom side and filled.

By using a transport device with at least one pair of conveyor belts, at least the package bodies open on one side can be easily and reliably transported through the filling machine. Preferably, however, in addition to the package bodies, the transport device also transports package sleeves that are not yet sealed on the bottom side and/or packages that are sealed on both sides through the filling machine. The package sleeves and/or packages are then also held between the conveyor belts of a pair of conveyor belts and moved together with the conveyor belts in the transport direction of the corresponding transport device. Thereby, the conveyor belts come into contact with the package sleeves, package bodies and/or packages, i.e. the package elements.

As the transport devices of the filling machines are provided for transporting package sleeves, package bodies and packages in different sections of the transport device, the term "package elements" is sometimes used in the following as a general term covering package sleeves, package bodies and packages in order to avoid having to distinguish specifically between package sleeves, package bodies and packages in each case for the sake of clarity. Depending on the context, the term package element can therefore be used synonymously with package sleeve, package body and/or package.

The filling machines described above are quite complex in design and therefore expensive to manufacture. In this respect, there is a need for further optimization in this context.

Therefore, the object of the present invention is designing and further developing the filling machine and the method, each of the type mentioned at the beginning and described in more detail above, in such a way that a simplification of the design is achieved without having to accept functional restrictions.

This object is solved in a filling machine according to the preamble of claim 1 in that the transport device has at least one pair of at least partly magnetic conveyor belts, for holding the package bodies on opposing side walls and for moving the package bodies in a transport direction, and in that magnets for holding the conveyor belts in an area adjacent to the magnets are assigned to the rear sides of the conveyor belts facing away from the package bodies.

The object is also solved according to claim 15 by a method for filling package bodies open on one side with products using a filling machine, preferably according to one of claims 1 to 14,
- in which the package bodies, which are open on one side, are held by at least one pair of conveyor belts of a transport device and are moved at least from a filling station to a head closure station,
- in which the package bodies, which are open on one side, are filled with a product in the filling station,
- in which the head of the package bodies filled in the filling station is sealed in the head sealing station and
- in which the conveyor belts of the pair of conveyor belts are held at least in sections by magnets assigned to the rear sides of the conveyor belts facing away from the package bodies open on one side.

By using a transport device with at least one pair of conveyor belts, at least the package bodies that are open on one side can be transported through the filling machine easily and reliably. Preferably, however, in addition to the package bodies, the transport device also transports package sleeves that are not yet sealed on the bottom side and/or packages that are sealed on both sides through the filling machine. The package sleeves and/or packages are then also held between the conveyor belts of a pair of conveyor belts and moved together with the conveyor belts in the transport direction of the corresponding transport device. Thereby, the conveyor belts come into contact with the package sleeves, package bodies and/or packages, i.e. the package elements.

The additional use of magnets in combination with the magnetic conveyor belts makes it possible to prevent the conveyor belts from tipping into the space between the conveyor belts of a pair of conveyor belts in a simple and at the same time very reliable way if there are no package elements between the conveyor belts. Otherwise, the conveyor belts cannot tip into the gap because they are prevented from doing so by the contact with the package elements. The magnets make it possible to dispense with structurally complex guides for the conveyor belts, which would hold the conveyor belts securely in position in all operating states of the filling machine. Such guides could also rub against the conveyor belts and package elements causing damage to the conveyor belts and/or package elements.

For the magnets to attract and hold the conveyor belts, these must be magnetic at least in sections, for which purpose the conveyor belts can be made at least partially form a magnetic material like metal for example. In a simple case, the conveyor belts can have metal filaments, in particular made of iron or steel, whereby the metal filaments can form a mesh or a fabric. As an alternative or in addition, the magnetic parts of the conveyor belts can be incorporated in a plastic or rubber that can come into contact with the package elements. In order not to impair the transportation of the package elements, i.e. the package sleeves, package bodies and/or packages, the magnets are also provided on the rear side of the conveyor belts, which do not come into contact with the package elements.

In a first particularly preferred embodiment of the filling machine, guides are assigned to the conveyor belts of the at least one pair of conveyor belts of the transport device. At least one guide can be assigned to each conveyor belt. The guides hold and guide the associated conveyor belt at least in sections. The conveyor belts are held in at least one direction at least substantially transverse to the transport direction, in particular at the rear side against a rearward pulley, and at least substantially parallel to the corresponding conveyor belt. In a particularly preferred embodiment of the filling machine, this direction can be an at least essentially vertical direction upwards and/or downwards. This is particularly preferred if the conveyor belts circulate endlessly at least essentially in a horizontal direction. Then the transport direction for the package elements is also at least essentially horizontal. In a preferred embodiment of the filling machine, the magnets are also provided at least adjacent to the guides in the transport direction. The magnets then ensure, for example, that the conveyor belts circulate through the guides. In addition, holding of the conveyor belts in a corresponding position by the magnets is not impaired by the guides. This also ensures that the conveyor belts reliably run into the downstream guides and/or out of the guides due to the arrangement of the magnets.

In order to be able to transport package bodies having different sizes with one and the same transport device at least from the filling station to the head closure station, the transport device can preferably be adjusted in a way that the width of the gap provided between the conveyor belts of the at least one pair of conveyor belts can be increased or reduced. Such an adjustment can take place after package bodies of a particular size have been filled in the filling station and closed in the head closure station and before package bodies of a different size will be filled in the filling station and closed in the head closure station. The width of the gap between the conveyor belts of the at least one pair of conveyor belts is then adapted to the corresponding width of the package bodies to be transported by the transport device. As an alternative or in addition the gap width between the conveyor belts of the at least one pair of conveyor belts can be adjustable in very small steps for fine tuning by way of precisely adapting the gap width between the conveyor belts to the size of a given type of package body. In this respect it is preferred, both for transporting package body types with different sizes and/or for fine tuning the transport device, if the distance of the magnets and/or the guides of opposing conveyor belts are adjustable to match the width of the type of package bodies to be filled.

It is simple and practical if the guides have rail elements that are at least essentially C-shaped. These can simply hold and/or guide the conveyor belts at the upper and lower edges. For this purpose, it is useful if the rail elements engage over the upper edges of the conveyor belts adjacent to the upper edge of the conveyor belts and/or engage under the lower edges of the conveyor belts adjacent to the lower edge of the conveyor belts, in each case in the direction of the opposing conveyor belt of the at least one pair of conveyor belts, if required.

The conveyor belts of the at least one pair of conveyor belts are preferably guided endlessly around pulleys. The conveyor belts are thus deflected around at least two pulleys at opposite ends of the conveyor belts, wherein the conveyor belts between the at least two pulleys have, on the one hand, an at least substantially straight transport section for transporting the package elements and, on the other hand, an at least substantially straight return section aligned at least substantially parallel to the transport section for returning the conveyor belts. The return sections are not used for transporting package elements, but for the endless circulation of the conveyor belts.

It may be sufficient for the magnets and/or the rail elements to be assigned exclusively to the transport section of the conveyor belts. The design of the return section can therefore be particularly simple and cost-effective. To adapt the transport device to package bodies with different sizes or for fine tuning the gap width between the conveyor belts of the at least one pair of conveyor belts, it can be sufficient to adjust the distance of opposing guides and/or opposing magnets of the transport section of the conveyor belts of a pair of conveyor belts. This would additionally allow for a compact design of the filling machine.

For a precise, in particular step-by-step, transportation of the package elements, it may be advisable to provide at least the two pairs of conveyor belts. As an alternative or in addition the at least one conveyor belt of the at least one pair of conveyor belts provide transport cams for positioning and/or transporting the package elements. The package elements can rest against at least one transport cam of each conveyor belt in order to achieve exact positioning. This can be further improved if the package elements are in contact with two transport cams of each conveyor belt of the pair of conveyor belts. In this case, two transport cams are arranged in front of and two transport cams behind the respective package element. For example, the package elements can only be gripped and moved by the transport cams of the conveyor belts, but not necessarily also by the belt sections of the conveyor belts. However, if the belt sections of the conveyor belts also hold the package elements from both opposing sides, the package elements are held in place even better. The transport cams can then only serve to position the package elements.

As an alternative or in addition, at least two pairs of conveyor belts arranged parallel to one another can be provided in order to increase the number of package elements transported per unit of time. In order to also keep the conveyor belts of adjacent pairs of conveyor belts in position on the return section, in particular to prevent the conveyor belts from tilting in a direction towards the respective adjacent conveyor belt of the adjacent pair of conveyor belts, the return sections of two conveyor belts of adjacent pairs of conveyor belts can be aligned adjacent to one another in such a way that the free ends of at least some of the transport cams of the two conveyor belts are provided opposite one another and at least substantially adjacent to one another. If one of the conveyor belts tends to tilt in the direction of the adjacent conveyor belt, this could only occur to a very small extent. Otherwise, the opposite transport cams of the adjacent conveyor belts would come into contact with each other and block any further tilting of one or both conveyor belts. It could be sufficient if only every second pair of transport cams in the return section is opposite each other and at most slightly spaced apart, or if a separate transport cam is always arranged between such pairs of transport cams in order to prevent the conveyor belts from tilting inwards. This depends on how many transport cams are assigned to a package element.

If the free ends of at least some of the transport cams are slanted in at least one direction towards the associated conveyor belt, they can dry easily in the return section if the transport cams are subjected to cleaning, for example. The transport cams are then accessible to drying air everywhere despite the small distance to the opposite transport cams of the adjacent conveyor belt. The inclination of the transport cams can be provided along a plane that intersects the associated conveyor belt at least substantially transversely to its longitudinal extension. The corresponding line of intersection between the plane of inclination and the conveyor belt can therefore be aligned vertically if required. As an alternative or in addition, however, the inclination can also be made in a plane that intersects the conveyor belt at least substantially in the longitudinal direction of the conveyor belt. The corresponding line of intersection between the plane of inclination and the conveyor belt can therefore be aligned horizontally if required. Instead of an inclination or in addition to this, at least some transport cams can be provided with a distance from the free end to the associated conveyor belt that is not constant over the entire length of the transport cam. The corresponding length of the transport cam can change over the extension of the transport cam transverse to the conveyor belt. For example, the transport cam can be longer further up than further down or have more than two sections of different lengths across the height of the transport cams.

The accessibility of the transport cams for drying air can also be ensured, for example, in such a way that the free ends of at least some of the transport cams are at least substantially wedge-shaped and/or have an at least substantially triangular cross-section. This prevents two opposite transport cams with relatively large, flat and parallel surfaces of the free ends from lying against each other, for example in the event that the transport cams are rectangular in shape. These surfaces would then only dry poorly if there was moisture between them.

However, one of two opposing transport cams can still be rectangular if the transport cam adjacent to the free end itself has a clearly differently shaped free end. A cuboid transport cam can be useful for positioning the package elements. Therefore, at least one transport cam of a conveyor belt adjacent to each package element can always have a cuboid shape. In other words, the conveyor belts of the at least one pair of conveyor belts can each have two transport cams for positioning and/or transporting a package element, wherein at least two, in particular at least three, of the four transport cams for positioning and/or transporting a package element are angled and/or formed with a varying length along the height of the conveyor belt.

As an alternative or in addition to rectangular transport cams, transport cams can also be provided with a contact surface for contact with a package element that is not aligned vertical, but is slightly inclined in relation to such a vertical plane, in particular in the transport direction and vice versa, respectively. This may allow the package elements to be held more reliably and/or to securely hold a package element with a correspondingly inclined contact surface. Package elements with such contact faces are typically not fully cuboid in shape. The inclination of the contact surface relative to a plane perpendicular to the associated conveyor belt can be selected so that the lower end of the contact surface in the direction of gravity protrudes further in the direction of the package element to be held with the transport cam than the upper end of the contact surface.

At least one transport cam of at least one conveyor belt of at least one pair of conveyor belts can also be designed to be detectable by a sensor of the filling machine. The sensor then detects when the at least one transport cam passes the sensor system to determine whether the conveyor belts are correctly aligned, are correctly positioned, are moving at the correct speed or the like. It may therefore be expedient, if necessary, if a sensor for detecting at least one transport cam is assigned to each pair of conveyor belts or even to each conveyor belt. It can be particularly simple if the at least one transport cam has at least one metal pin for this purpose which, for example, can be detected by an inductive sensor of the sensor system.

If several parallel pairs of conveyor belts are provided, the tension of the individual conveyor belts, which must be absorbed by the pulleys, can lead to undesirable distortion of the filling machine. The conveyor belts of the transport device may then no longer be aligned parallel enough to each other, so that bottlenecks and/or areas of excessive width can occur in the transport section. The package elements could be damaged in the bottlenecks or slip in the areas of excessive width, particularly downwards. To prevent the filling machine from warping, the parallel pairs of conveyor belts can be connected to each other via at least one crossbar extending across all pairs of conveyor belts, which can hold the conveyor belts in position relative to each other, against which the conveyor belts can be supported and/or which braces the transport device.

The problem of bending or distorting of the filling machine is not necessarily related to the problem of holding the conveyor belts in place, which is solved by the magnets.

These problems and the corresponding solutions can therefore also be considered independently of each other, in particular regarded as independent inventions and, thus, pursued as independent inventions. Consequently, the technical teachings relating to the magnets as described above and the technical teachings relating to the at least one crossbar as described in this context could be made subject-matter of the present patent application independently of each other, even if in the claims the crossbar with further optional features is only claimed as being dependent on claim 1. However, this is not mandatory.

It is particularly useful in connection with the at least one crossbars if at least two crossbars are provided, with one such crossbar being provided above the conveyor belts and one crossbar being provided below the conveyor belts. In this way, warping of the filling machine in a plane perpendicular to the conveyor belts, i.e. upwards or downwards, can also be avoided. This applies all the more if the crossbars are provided at approximately the same location in the longitudinal direction of the conveyor belts.

Irrespective of the number of crossbars, the at least one crossbar is also regarded as an object of an independent invention which does not require the features of the characterizing part of claim 1. The present application could therefore also be directed to the at least one crossbar described herein without magnets and the magnetic conveyor belts.

The crossbar can be used particularly effectively if the crossbar is connected to a crossbeam via at least two abutments assigned to opposite ends of the crossbar and at least one screw arranged between the abutments. If the crossbeam provides a very high moment of inertia in a plane parallel to the conveyor belts, which is much greater than the moment of inertia of the crossbar, the crossbar can be tensioned and curved relative to the crossbeam via the at least one screw, namely between the abutments and in a plane parallel to the conveyor belts, as well as in a direction parallel to the longitudinal extension of the conveyor belts. The at least one screw engages with the crossbeam between the two abutments. The at least one screw can also be used to adjust the degree of pretension and the degree of curvature of the at least one crossbar in order to counteract and compensate for possible distortion of the filling machine due to the tension of the conveyor belts. The at least one screw can, for example, either engage in a thread of the crossbeam and be supported against the crossbar or alternatively engage in a thread of the crossbar and be supported against the crossbeam.

Regardless of the number of crossbars, a crossbar can prevent the filling machine from warping, especially if it is provided near the front end of the transport device. To ensure that the at least one crossbar can reliably prevent the filling machine from warping, it is advisable to firmly connect the crossbeam at its opposite longitudinal ends outside the outer conveyor belts to a frame element of the filling machine, in particular to screw it in place.

The overall advantages described above come into play to a particular extent if the transport device for transporting package elements is designed from a transfer station for transferring the package elements, in particular from above or from the front, via a bottom sealing station for forming and sealing the bottom of the package sleeves to the filling station. In this case, all these stations, which are then part of the filling machine, can be operated with one and the same transport device in order to carry out the corresponding working steps on the package elements transported by the transport device. The package element from the transfer station to the bottom sealing station can be a package sleeve, from which a package body is formed in the bottom sealing station by sealing the bottom.

As an alternative or in addition, for the same reason, it may be provided that the transport device is designed to transport package elements from the head closure station to a discharging station for discharging the package elements, in particular downwards or to the rear. The package element can be a package body, from which a package is formed in the head closure station, which is discharged by the transport device in the discharging station.

In order to be able to form an aseptic zone in the filling machine in which the package bodies are filled, a sterilization station can be provided with a hot air station for applying hot air to the package elements, a sterilization agent station connected downstream of the hot air station for applying sterilization agent to the package elements and a drying station connected downstream of the sterilization agent station for applying drying air to the package elements. For the sake of simplicity, it is advisable if the transport device is designed to transport the package elements through the sterilization station and, preferably, subsequently to the bottom sealing station. The package elements in the sterilization station can be a package body that is closed at one longitudinal end. However, with regard to sterilization, it can be particularly preferable if the package elements are package sleeves that are open on both sides and through which the hot air, the sterilizing agent and/or the drying air can be passed.

Furthermore, the advantages of the filling machine are particularly well utilized if the package elements are formed at least essentially, if necessary, in addition to a pouring element and a screw cap, from a package material in the form of a cardboard/plastic composite laminate, which can have further layers, for example in the form of an aluminum layer.

In the following, the invention is explained in more detail with reference to a drawing showing only embodiments. The drawing shows
- Fig. 1A-E: different states of a package element during the production of a package starting from a blank of package material,
- Fig. 2: a schematic side view of a filling machine according to the invention,
- Fig. 3: a sequence of individual steps or stations in the process for producing a filled, sealed package,
- Fig. 4: the transport device of the filling machine of Fig. 2 in a schematic plan view from above,
- Fig. 5A-C: a detail of the transport device of the filling machine of Fig. 4 in a plan view from above and in a sectional view along the sectional plane VB-VB of Fig. 5A,
- Fig. 6A-D: a detail of the transport device of the filling machine of Fig. 4 in a plan view from above and in sectional views along the sectional planes VIB-VIB, VIC-VIC and VID-VID of Fig. 6A and
- Fig. 7A-B: a sectional view through a crossbar of the transport device of the filling machine from Fig. 4 and a sectional view through the transport device next to two crossbars.

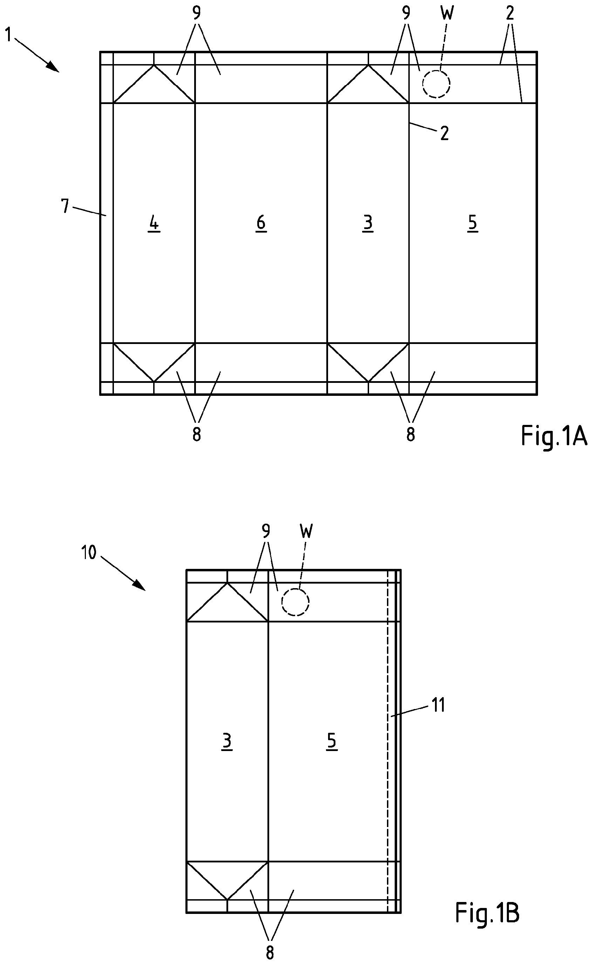

Fig. 1A shows a blank 1 of a package material known from the prior art, from which a package sleeve can be formed. The blank 1 can comprise several layers of different materials, for example paper, cardboard, plastic or metal, in particular aluminum. The blank 1 has several folding lines 2, which are intended to facilitate folding of the blank 1 and divide the blank 1 into several surfaces. The blank 1 can be divided into a first side surface 3, a second side surface 4, a front surface 5, a rear surface 6, a sealing surface 7, bottom surfaces 8 and head surfaces 9 which can also be addressed as gable surfaces. A package sleeve 10 can be formed from the blank 1 by sealing the sealing surface 7 with the front surface 5, which is shown in the flat folded state in Fig. 1B by overlapping area 11. A round weakening line W is shown in a dashed line in the area where a pouring element F is to be sealed on.

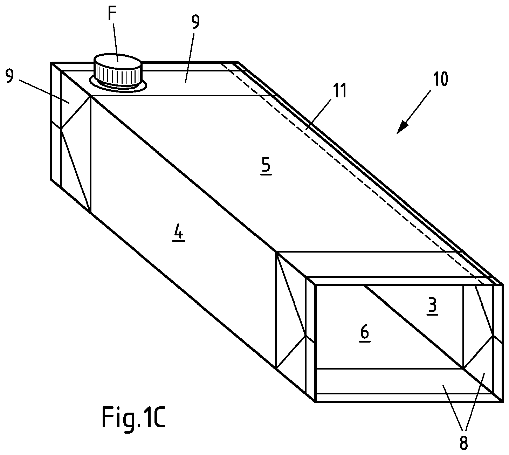

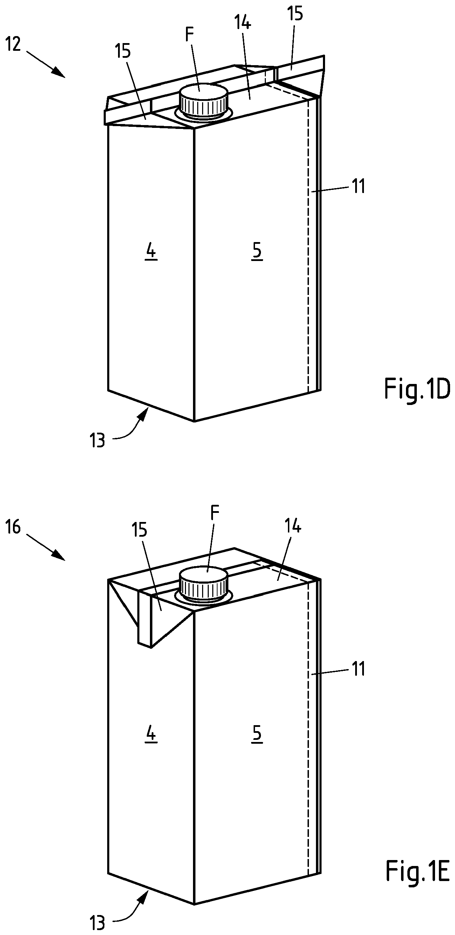

In Fig. 1C the package sleeve 10 from Fig. 1B is shown in a partially unfolded state and provided with a pouring element F carrying a screw cap. The pouring element is ultrasonically welded to the package material. Figs. 1D shows a package body 12 formed from the package sleeve 10 of Fig. 1C in the filled state during sealing of the head surfaces 9. The bottom 13 of the package sleeve 10 has been sealed before in the area of the bottom surfaces 8 to form the package body 12 which can be filled from above. Thereafter the head 14 of the package body 12 is sealed in the area of the head surfaces 9. The ears 15 formed by sealing the head surfaces 9 are then sealed or glued to the side surfaces 3,4 and package 16 shown in Fig. 1E is obtained.

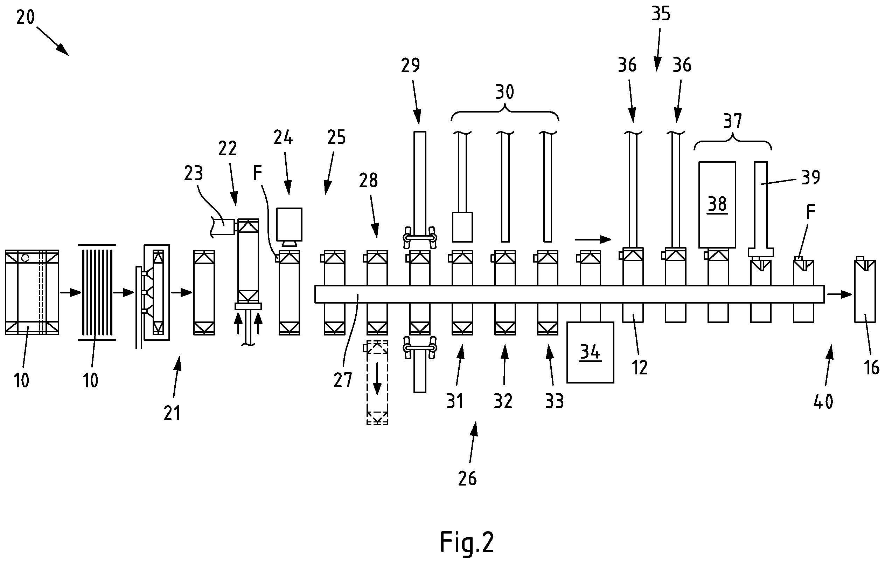

Fig. 2 shows a filling machine 20. Package sleeves 10 are taken from a stack 21 of package sleeves 10 and slightly unfolded. Thereafter the package sleeves 10 are transferred from to an unfolding station 21 of the filling machine 20. However, the package sleeves 10 could also be unfolded beforehand so that no unfolding station 21 is required. The package sleeves 10 are then lifted in an applicator station 22, provided with a pouring element F by means of an ultrasonic sealing unit 23 known per se and lowered again. In the next, optional, position, an optical sensor system 24 checks the package sleeve 10 provided with the pouring element F for possible defects. The package sleeve 10 is then taken over in a transfer station 25 by a transport device 26 between a pair of conveyor belts 27. If required, an ejection station 28 can also be provided for ejecting package sleeves 10 that have not been correctly transferred. Subsequently a pre-folding station 29 is provided, in which both the head 14 and the bottom 13 of the carton sleeves 10 are pre-folded. The package sleeves 10 are then sterilized in the sterilization station 30. In the embodiment example shown, the sterilization station 30 has three sub stations, namely a hot air station 31 for preheating the package sleeves 10 that are still open at the bottom, a sterilizing agent station 32 for sterilizing the package sleeves by injecting a sterilizing agent and a drying station 33 for drying the sterilized package sleeves. Thereafter, the bottom sealing takes place in the bottom sealing station 34, whereby the ears formed thereby are sealed from below onto the closed bottom 13 of the package bodies 12 formed by the bottom sealing station 34. After filling the package body 12 in a subsequent filling station 35, which can take place in two subsequent steps in two filling units 36 in the present case, the now filled package body 12 passes through the head closure station 37 for forming and sealing the head 14 of the package 16, which can also be regarded as the gable of the package 16. First in a head seam station 38 the head seam is sealed. Second the thereby formed ears 15 are then sealed to the side surfaces 3,4 in the ear seam station 39, resulting in the finished package 16, which is discharged at the end of the transport device 26 via a discharging station 40, in particular in a horizontal direction.

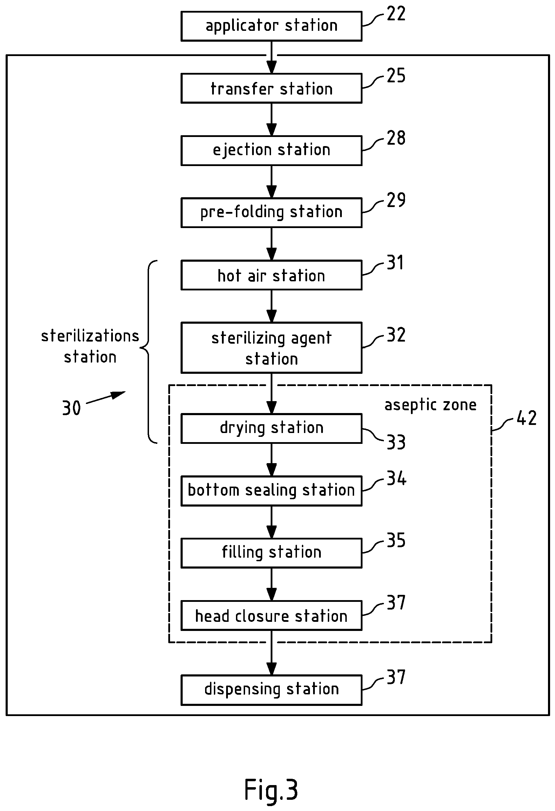

As shown in Fig. 3 the working steps from the drying of the package sleeves 10 to the closing of the head 14 or top of the package bodies 12 take place in an aseptic zone 42.

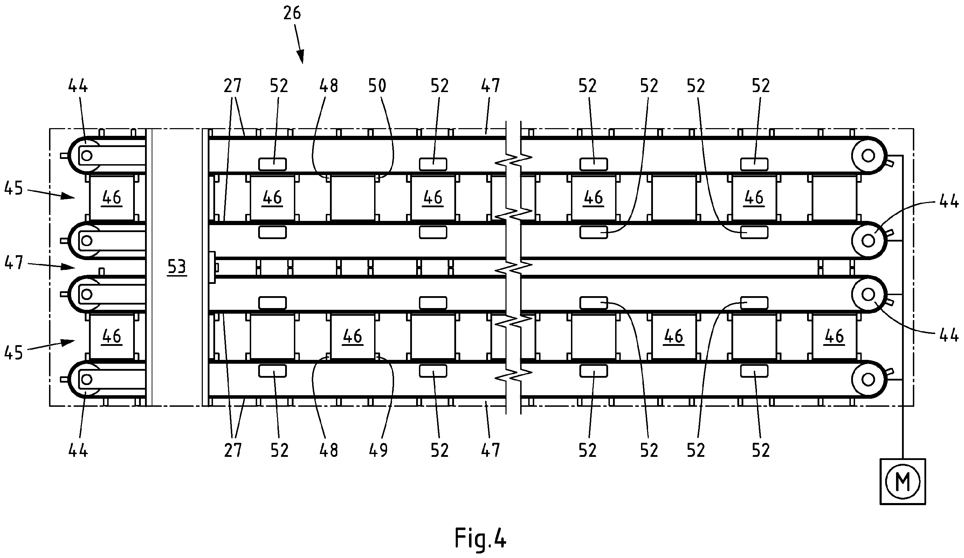

Fig. 4 shows a schematic view of the transport device 26. The transport device 36 comprises several, specifically six, pairs of conveyor belts 27 that are deflected via return pulleys 44 and circulate endlessly. Between the pulleys 44, the conveyor belts 27 form a transport section 45 on one side for transporting package elements 46 and a return section 47 on the other side for returning the conveyor belt 27 after it has passed through the transport section 45. The package elements 46 are package sleeves 10 in a front area of the transport device 26, package bodies 12 in a middle area of the transport device 26 and packages 16 in a rear area of the transport device 26. The package elements 46 are fed at one end of the transport devices 26 and discharged at the opposite end. During transport of the package elements 46, they are held between the conveyor belts 27 of the pairs of conveyor belts 27, namely between four transport cams 48,49,50, of which two transport cams 48 are provided in front of the package elements 46 and two behind 49,50 the respective package elements 46. The transport cams 48,49,50 each engage with the associated package element 46. In the area of the return sections 47 of the conveyor belts 27, these are provided adjacent to a conveyor belt 27 of the adjacent pair of conveyor belts 27, with exception of the outer conveyor belts 27 of the filling machine 20. The transport cams 48,49,50 of the conveyor belts 27 which are adjacent to each other in the return sections 47 of the conveyor belts 27 are arranged directly opposite to each other and either touch each other or almost touch each other.

Magnets 52 are distributed along the transport sections 45 of the conveyor belts 27, which are each assigned to the rear sides of the conveyor belts 27 in the transport sections 45 and which magnetically pull the conveyor belts 27 provided with magnetic components towards the magnets 52 and, consequently, hold the conveyor belts 27 in position. At the front end of the transport device 26, the conveyor belts 27 are connected to a crossbar 53, which is described in detail below.

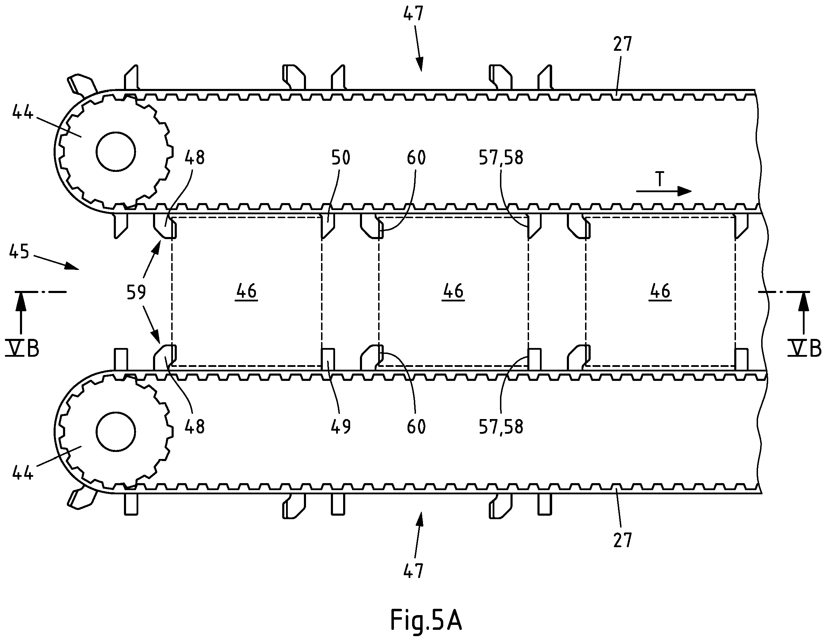

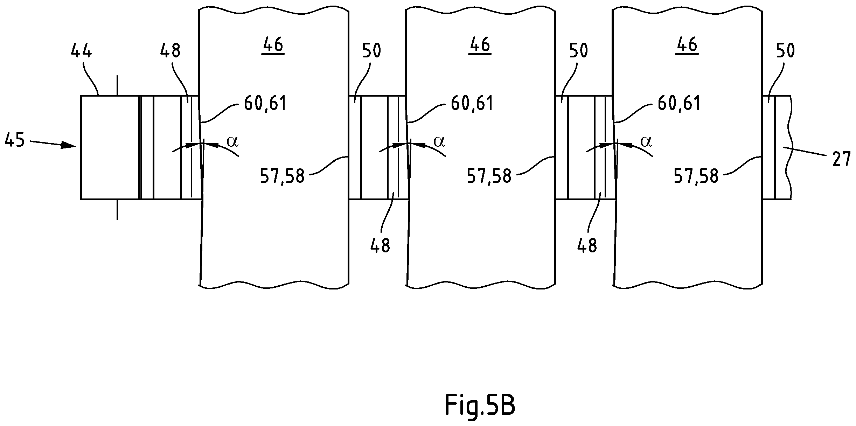

Figs. 5A-B show a detail of the transport device 26 next to a pair of conveyor belts 27. The package elements 46 held between the transport sections 45 of the conveyor belts 27 and between four transport cams 48,49,50 of the conveyor belts 27 are illustrated with dashed lines. The transport cams 49,50 provided directly behind the package elements 46 in the transport direction T are of different shapes. In the view from above, one transport cam 49 has a cuboid cross-section, while the opposite transport cam 50 has a triangular cross-section at the free end. The two transport cams 49,50 arranged behind the package elements 46 in the transport direction T each have a contact surface 57 on the package elements 46 that is essentially perpendicular to the transport direction T and to the conveyor belts 27. These contact surfaces 57 of the transport cams 49,50 rest against parallel contact surfaces 58 of the package elements 46.

The transport cams 48 provided directly in front of the package elements 46 in the transport direction T are beveled on the side of the free end facing away from the respective package element 46. On the sides of these transport cams 48 opposite the beveled sections 59, the transport cams 48 form contact surfaces 60 for contact with package elements 46, which protrude further towards the package elements 46 at the lower end than at the upper end. The contact surface 60 is aligned in a plane perpendicular to the conveyor belts 27 and inclined by the angle α to the transport direction T. These contact surfaces 60 are in contact with corresponding contact surfaces 61 of the package elements 46. In case the contact surfaces 61 of the package elements 46 are not vertical in order to, for example, build packages 16 which are not full cuboid in shape the inclined contact surfaces 61 of the package elements 46 can be held properly by the inclined contact surfaces 60 of corresponding cams 48.

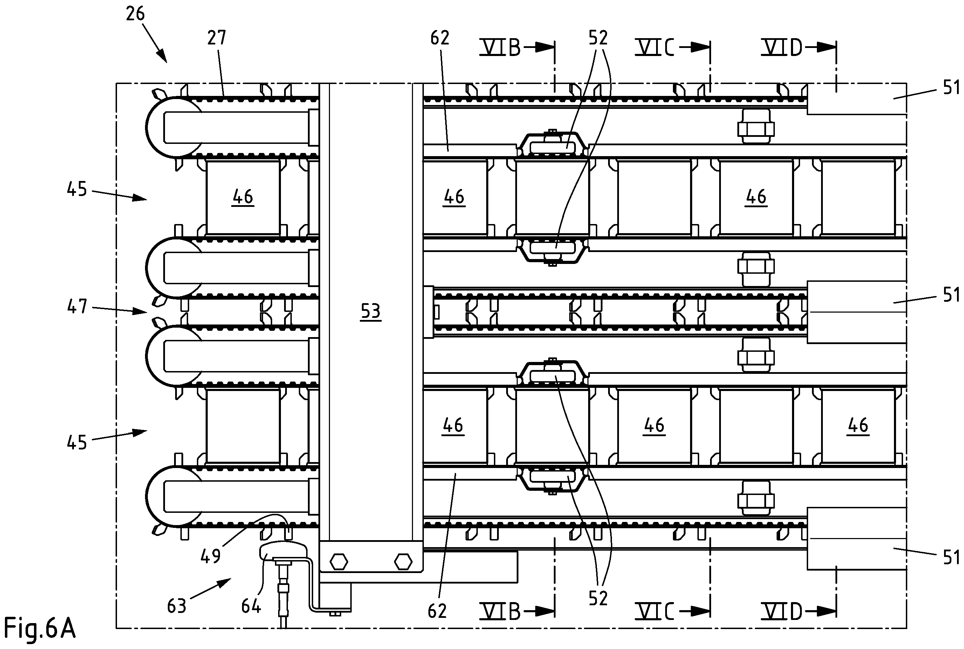

Figs. 6A-D also shows a detail of the transport device 26 in a front area of the transport device 26. In Fig. 6A the transport device 26 is shown in a view from above. Package elements 46 are located between the transport sections 45 of the conveyor belts 27, whereby the transport sections 45 of the conveyor belts 27 are held and guided in sections in guides 62. Adjacent to the guides 62 the magnets 52 already mentioned are provided, which come into contact with the rear sides of the conveyor belts 27 facing away from the package elements 46. If necessary, sections without guides 62 or magnets 52 are also provided along the transport sections 45. The magnets 52 and the guides 62 of the transport sections 45 of the pairs of conveyor belts 27 are adjustably mounted at a support of the filling machine 20, that is not shown for the sake of clarity. Therefore, the distance of the magnets 52 and the distance of the guides 62 of opposing conveyor belts 27 in the transport sections 45 can be enlarged or reduced depending on the width of different types of package elements 46 to be transported by the transport device 26 or in order to precisely adapt the gap width of the conveyor belts 27 of the pairs of conveyor belts 27 to the size of a given type of package element. Due to respective adjustment of magnets 52 and guides 62 the width of the gap provided between the conveyor belts 27 of a pair of conveyor belts 27 in the transport sections 45 of the conveyor belts 27 can be adapted to the corresponding width of the package elements 46 to be transported by respective conveyor belts 27.

In addition, no magnets 52 are assigned to the return sections 47 of the conveyor belts 27. Also the guides 65 are designed differently on the return sections 47 of the conveyor belts 27 than on the transport sections 45. Furthermore, the transport cams 48,49,50 of the conveyor belts 27 in the return sections 47 are arranged opposite the transport cams 48,49,50 of conveyor belts 27 of an adjacent pair of conveyor belts 27.

The opposite transport cams 48,49,50 are directly adjacent to each other and form only a small gap between them when the transport cams 48,49,50 do not rest against each other with their free ends and are thus supported against each other. The middle conveyor belts 27 can be guided in pairs in a return channel 51 over at least parts of the return sections 47. The return sections 51 of the outer conveyor belts 27 are also guided in a return channel 51, but individually in each case. A sensor system 63 is assigned to an outer return section 47 of a conveyor belt 27, which detects the transport cams 49 transported past the sensor 64 and thus detects the position or alignment of the conveyor belts 27. For this purpose, the transport cam 49 can include at least one metal pin 54, for example. The sensor system 63 can then comprise an inductive sensor 64.

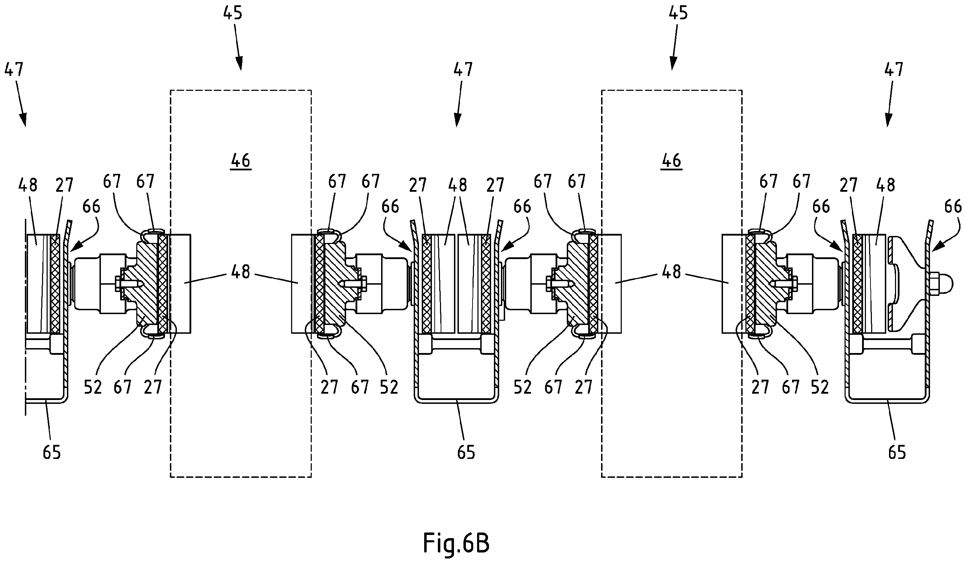

In Fig. 6B the transport device 26 is shown in a section perpendicular to the conveyor belts 27, namely at the height of magnets 52. The magnets 52 shown, which are preferred in this respect, have a diameter that is slightly smaller than the width of the conveyor belts 27. The transport sections 45 and the return sections 47 of the conveyor belts 27 run parallel to each other and at the same height. The transport cams 48,49,50 shown, which are preferred in this respect, extend over at least essentially the entire width, i.e. the entire height, of the conveyor belts 27. In the area of the return sections 47, the lower edge of the conveyor belts 27 rests on the guide 65 of the conveyor belts 27 in the return section 47, which is approximately U-shaped in the area shown. In the return section 47, the backs of the conveyor belts 27 rest more or less on essentially vertically aligned, flat sections 66 of the guides 65.

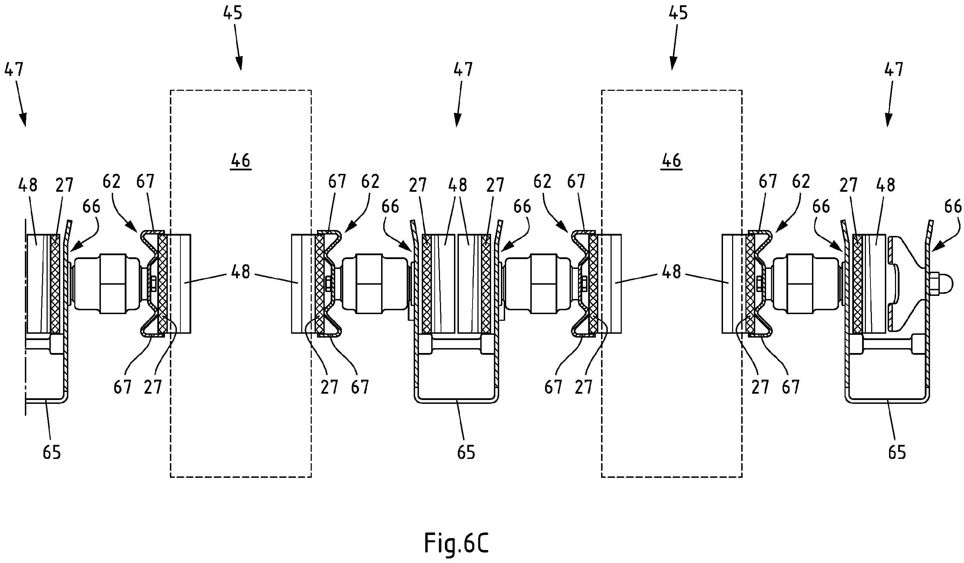

The guides 62 of the conveyor belts 27 in the transport sections 45 are shown in particular in Fig. 6C. The guides 62 comprise approximately C-shaped rail elements and engage with the outer legs 67 both above and below the conveyor belts 27, whereby the edges of the conveyor belts 27 can rest more or less against the legs 67 of the guides 62.

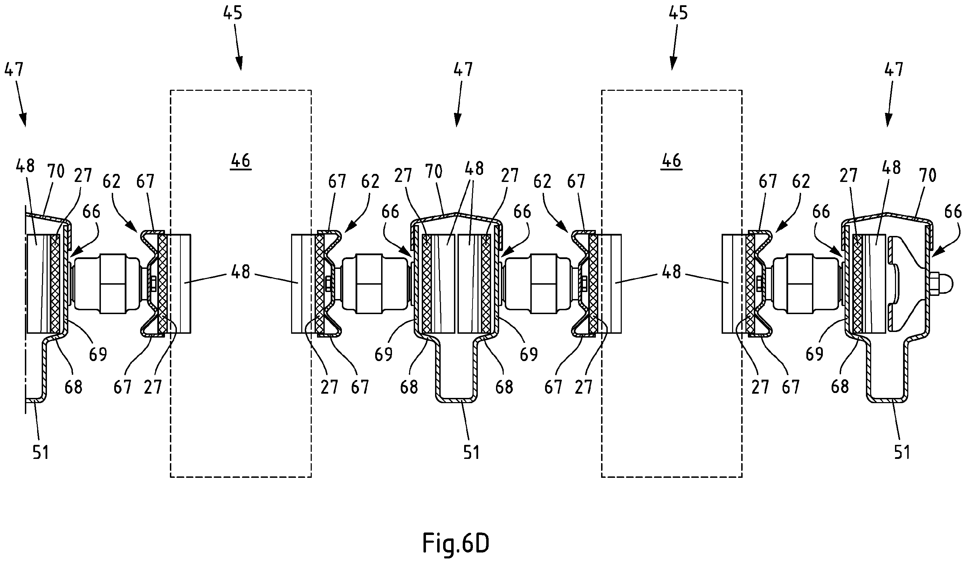

In Fig. 6D the transport device 26 is shown at a point where the conveyor belts are guided in the return sections 47 in a return channel 51. The return channel 51 is provided with supports 68 for the lower edges of the conveyor belts 27 and at least vertical side walls 69 for contact with the rear sides of the conveyor belts 27. The return channel 51 is closed at the top by a cover 70. The return channel 51 is provided in particular in the aseptic zone 42 in order to prevent contamination of the aseptic zone 42 by the conveyor belts 27 traveling in the return section 47. If necessary, the conveyor belts 27 in the return sections 47 can be cleaned with a cleaning device.

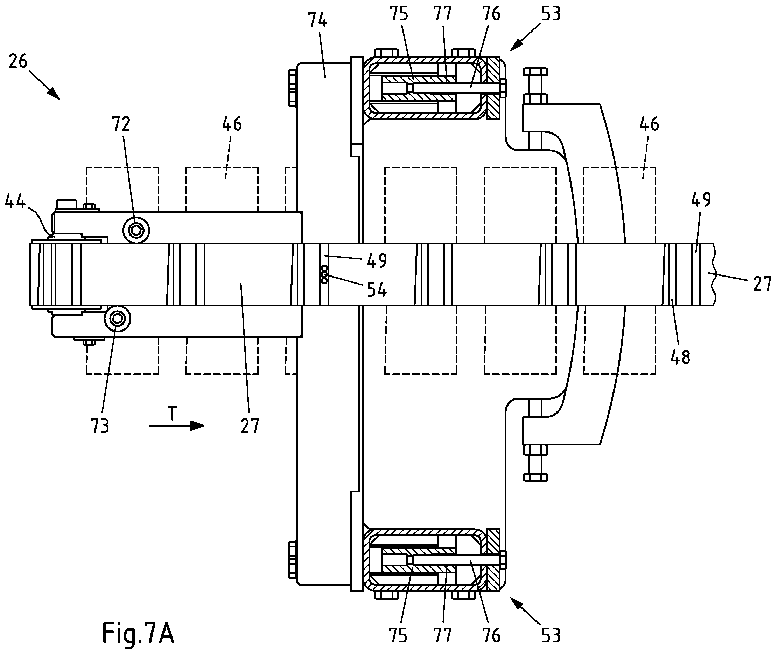

Figs. 7A-B show different views of the crossbars 53 associated with the front end of the transport device 26. Fig. 7A shows a vertical section through the transport device 26 and through the two crossbars 53, one crossbars 53 is arranged above the conveyor belts 27 and one crossbars 53 is arranged below the conveyor belts 27. The conveyor belts 27 are guided at the upper edge and the lower edge at the front next to the front pulley 44 by rollers 72,73, which ensure that the conveyor belts 27 are reliably aligned with the pulleys 44. The two crossbars 53 are arranged at least essentially parallel to each other and are firmly connected to each other via a series of posts 74. In addition, the crossbars 53 are firmly connected to the individual conveyor belts 27 via the row of posts 74. One post 74 can be assigned to each conveyor belt 27. Each crossbar 53 contains a crossbeam 75 that extend transversely to the conveyor belts 27 and is arranged in a plane parallel to the conveyor belts 27. In this plane, the crossbeams 75 of the crossbars 53 have a significantly higher area moment of inertia than the crossbars 53 themselves, through which screws 76 are guided. The screws 76 are supported on the crossbars 53 and screwed into threads 77 in the crossbeams 75.

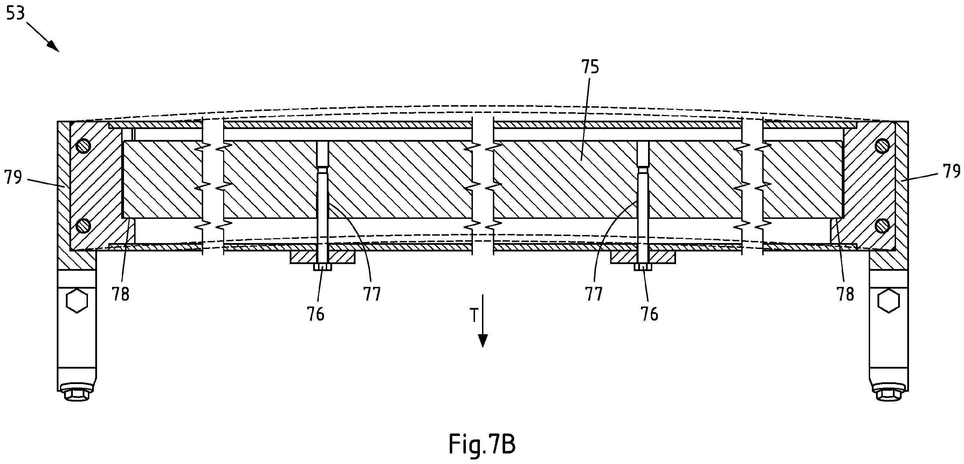

As shown in Fig. 7B, the longitudinal sides of the crossbeams 75 rest against abutments 78 of the crossbars 53, whereby the abutments 78 are provided at the longitudinal ends of the crossbeams 75. The screws 76 are screwed into the crossbeams 75 from the longitudinal side of the crossbars 53 associated with the abutments 78. The more these screws 76 are tightened, the more the areas of the crossbars 53 adjacent to the screws 76 are pulled towards the associated crossbeams 75. As a result, the crossbars 53 bend in a forward direction relative to the crossbeams 75 in a plane parallel to the conveyor belts 27 and in a direction opposite to the transport direction T of the transport device 26. Due to the fixed connection of the crossbars 53 to the conveyor belts 27, these are pressed outwards according to the curvature of the crossbars 53, indicated in Fig. 7B by doted lines. This allows the forces resulting from the tension of the conveyor belts 27 to be countered, which pulls them at the front end of the transport device 26 in the opposite direction to the curvature of the crossbars 53. To be able to absorb and dissipate the forces addressed, the crossbars 53 are firmly connected to a frame 79 of the filling machine 20 at their longitudinal edges.

## Claims

1. Filling machine (20) for filling package bodies (12) open on one side with products, the filling machine (20) having a filling station (35) for filling the package bodies (12) open on one side, a head closure station (37) for closing the head (14) of the filled package bodies (12) open on one side and a transport device (26) for transporting at least the package bodies (12) open on one side at least from the filling station (35) to the head closure station (37) through the filling machine (20),
**characterized in that**
the transport device (26) has at least one pair of at least partly magnetic conveyor belts (27), for holding the package bodies (12) on opposite side walls and for moving the package bodies (12) in a transport direction (T), and **in that** magnets (52) for holding the conveyor belts (27) in an area adjacent to the magnets (52) are assigned to the rear sides of the conveyor belts (27) facing away from the package bodies (12).

2. Filling machine according to claim 1,
**characterized in that**
guides (62) for holding the conveyor belts (27) at least in sections in at least one direction at least substantially transverse to the transport direction (T) and at least substantially parallel to the pair of conveyor belts (27) are assigned to the conveyor belts (27), and **in that**, preferably, the magnets (52) are provided adjacent to the guides (62).

3. Filling machine according to claim 2,
**characterized in that**
the distance of opposing magnets (52) of the at least on pair of conveyor belts (27) and/or the distance of opposing guides (62) of the at least on pair of conveyor belts (27) is adjustable and/or **in that** the guides (62) have at least substantially C-shaped rail elements and that the rail elements engage over the upper edges of the conveyor belts (27) adjacent to the upper edge of the conveyor belts (27) and engage under the lower edges of the conveyor belts (27) adjacent to the lower edge of the conveyor belts (27).

4. Filling machine according to one of claims 1 to 3,
**characterized in that**
the conveyor belts (27) are deflected about at least two pulleys (44), **in that** the conveyor belts (27) have, between the at least two pulleys (44), an at least substantially rectilinear transport section (45) for transporting the package bodies (12) and an at least substantially rectilinear return section (47) for returning the conveyor belts (27) aligned at least substantially parallel to the transport section (45), and **in that**, preferably, the magnets (52) and/or the guides (62) are assigned exclusively to the transport section of the conveyor belts (27).

5. Filling machine according to one of claims 1 to 5,
**characterized in that**
at least two pairs of conveyor belts (27) arranged parallel to one another are provided with transport cams (48,49,50) for positioning and/or transporting the package bodies (12), and **in that** the return sections (47) of two conveyor belts (27) of adjacent pairs of conveyor belts (27) are aligned adjacent to one another in such a way that the free ends of at least some of the transport cams (48,49,50) of the two conveyor belts (27) are provided opposite to one another and at least substantially adjacent to one another.

6. Filling machine according to claim 5,
**characterized in that**
the free ends of at least some of the transport cams (48,50) are beveled in at least one direction at an angle to the associated conveyor belt (27) and/or have a varying distance from the associated conveyor belt (27) in a direction perpendicular to the associated conveyor belt (27) in a direction traverse to the associated conveyor belt (27) and/or along the respective transport cams (48,49,50).

7. Filling machine according to claim 6,
**characterized in that**
the free ends of the at least some transport cams (48,50) have an at least substantially wedge-shaped cross-section and/or an at least substantially triangular cross-section and/or **in that** at least individual transport cams (49) project at the lower end in the direction of gravity relative to the upper end in the direction of the package body (12) to be held by the transport cams (48,49,50).

8. Filling machine according to claim 6 or 7,
**characterized in that**
conveyor belts (27) of the at least one pair of conveyor belts (27) each have two transport cams (48,49,50) for positioning and/or transporting a package body (12) and **in that** at least two, in particular at least three, of the four transport cams (48,49,50) for positioning and/or transporting a package body (12) are angled and/or are formed transversely to the associated conveyor belt (27) with a varying length.

9. Filling machine according to one of claims 1 to 8,
**characterized in that**
a plurality of pairs of conveyor belts (27) aligned parallel to one another are connected to one another via at least one crossbar (53) extending transversely over all pairs of conveyor belts (27), and **in that** the crossbar (53) is connected to a crossbeam (75) via at least two abutments (78) assigned to opposite ends of the crossbar (53) and at least one screw (76) arranged between the abutments (78) in such a way, that the degree of curvature of the crossbar (53) between the abutments (78) is adjustable in a plane parallel to the plane of the pairs of conveyor belts (27) and in a direction parallel to the longitudinal extension of the conveyor belts (27) by adjusting the at least one screw.

10. Filling machine according to claim 9,
**characterized in that**
the at least one crossbar (53) is assigned to the front end of the transport device (26) and/or **in that** the crossbar (53) is firmly connected to a frame element (79) at its opposite longitudinal ends outside the outer conveyor belts (27).

11. Filling machine according to one of claims 1 to 10,
**characterized in that**
the transport device (26) is designed for transporting the package bodies (12), which are open on at least one side, from a transfer station (25) for transferring the package elements (46), which are open on at least one side via a bottom sealing station (34) for forming and sealing the bottom (13) of the package bodies (12) to the filling station (35).

12. Filling machine according to one of claims 1 to 11,
**characterized in that**
the transport device (26) is designed to transport the sealed packages (16) from the head closure station (37) to a discharging station (40) for discharging the packages (16).

13. Filling machine according to one of claims 1 to 12,
**characterized in that**
a sterilization station (30) is designed with a hot air station (31) for applying hot air to the package elements (46), a sterilization agent station (32) connected downstream of the hot air station (31) for applying sterilization agent to the package elements (46) and a drying station (33) connected downstream of the sterilization agent (32) station for applying drying air to the package elements (46), and **in that** the transport device (26) is designed for transporting the package elements (46), which are open on at least one side, through the sterilization station (30) and, preferably subsequently, to the bottom sealing station (34).

14. Filling machine according to one of claims 1 to 13,
**characterized in that**
the package elements (46) are cardboard/plastic package elements (46) for forming cardboard/plastic composite packages (16).

15. Method for filling package bodies (12) open on one side with products using a filling machine (20), preferably according to one of claims 1 to 14,
- in which the package bodies (12), which are open on one side, are held by at least one pair of conveyor belts (27) of a transport device (26) and are moved at least from a filling station (35) to a head closure station (37),
- in which the package bodies (12), which are open on one side, are filled with a product in the filling station (35),
- in which the head (14) of the package bodies (12) filled in the filling station (35) is closed in the head closure station (37) and
- in which the conveyor belts (27) of the pair of conveyor belts (27) are held at least in sections by magnets (52) assigned to the rear sides of the conveyor belts (27) facing away from the package bodies (12) open on one side.
